(19)

**Europäisches Patentamt**

**European Patent Office**

**Office européen des brevets**

(11) **EP 1 455 300 A2**

(12) **EUROPEAN PATENT APPLICATION**

(43) Date of publication:
**08.09.2004 Bulletin 2004/37**

(51) Int Cl.7: **G06K 9/62**

(21) Application number: **04005131.0**

(22) Date of filing: **04.03.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL LT LV MK**

(30) Priority: **05.03.2003 JP 2003058511**

(71) Applicants:
• **NEC CORPORATION**
  **Tokyo (JP)**
• **JAPANESE FOUNDATION FOR CANCER RESEARCH**
  **Tokyo (JP)**
• **Eguchi, Shinto**
  **Tokyo (JP)**
• **Fujisawa, Hironori**
  **Tokyo (JP)**
• **Japan Biological Informatics Consortium**
  **Tokyo (JP)**

(72) Inventors:
• **Ogura, Maki**
  **Tokyo (JP)**
• **Andoh, Masataka**
  **Tokyo (JP)**
• **Saitoh, Akira**
  **Tokyo (JP)**

• **Wada, Yusaku,**
  **Japanes Found. for Cancer Research**
  **Tokyo (JP)**
• **Isomura, Minoru,**
  **Japanese Found. for Cancer Res.**
  **Tokyo (JP)**
• **Ushijima, Masaru,**
  **Japanese Found. for Cancer Res.**
  **Tokyo (JP)**
• **Miyata, Satoshi,**
  **Japanese Found. for Cancer Res.**
  **Tokyo (JP)**
• **Matsuura, Masaaki,**
  **Japanese Found. for Cancer Res.**
  **Tokyo (JP)**
• **Miki, Yoshio, Japanese Found. for Cancer Res.**
  **Tokyo (JP)**
• **Eguchi, Shinto**
  **Tokyo (JP)**
• **Fujisawa, Hironori**
  **Tokyo (JP)**
• **Furuta, Toshio**
  **Tokyo (JP)**

(74) Representative: **VOSSIUS & PARTNER**
  **Siebertstrasse 4**
  **81675 München (DE)**

(54) **Clustering apparatus, clustering method, and clustering program**

(57)     In a clustering apparatus comprising an input unit (1) supplied with a dataset including a plurality of samples, a data processing unit (4) for processing the samples to classify each sample into a class, and an output unit (3) for producing a processing result representative of classification, a parameter memory (51) in a memory unit (5) memorizes a target parameter obtained from past experiment. A parameter estimating section (24) of the data processing unit estimates a clustering parameter by the use of the target parameter memorized in the parameter memory. An unidentifiable sample detecting section (25) of the data processing unit detects a sample as an unidentifiable sample if posterior probabilities calculated for the sample by a probability density function produced by the clustering parameter estimated by the parameter estimating section are smaller than a predetermined value.

FIG. 4

**Description**

This application claims priority to prior Japanese application JP 2003-58511, the disclosure of which is incorporated herein by reference.

This invention relates to a clustering apparatus, a clustering method, and a clustering program and, in particular, to a clustering apparatus, a clustering method, and a clustering program each of which is based on normal mixture distribution.

As a typical statistical clustering technique, K-means clustering is known. In addition, a clustering method based on normal mixture distribution is also known.

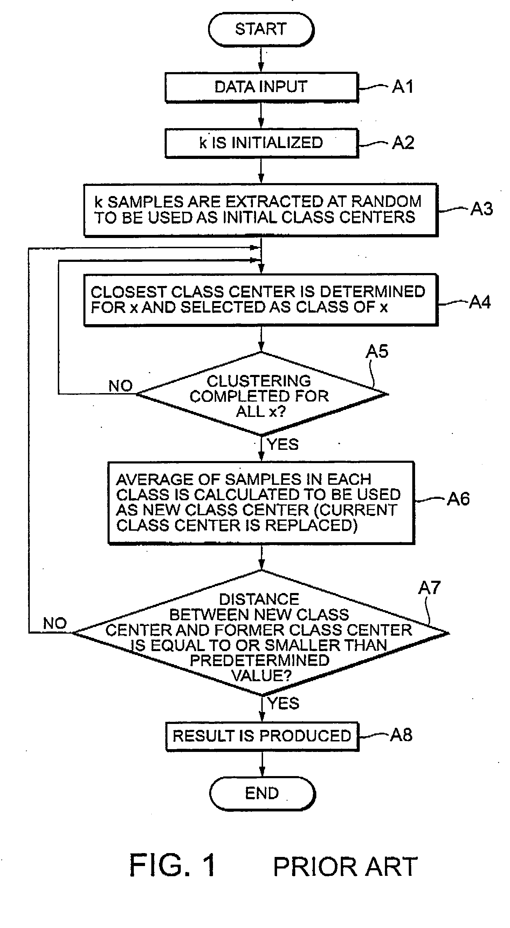

Referring to Fig. 1, the K-means clustering will be described. At first, a dataset including a plurality of samples is given (step A1). The number k of classes or clusters is determined (step A2). From all the samples, k samples are extracted at random and used as initial class centers for k classes, respectively (step A3). Next, for each of all the samples, the distance from each of the class centers, k in number, is calculated and each sample is classified into a particular class having the class center closest from the sample (steps A4 and A5). From those samples classified in each class, a new class center is calculated as an average value (step A6). Until the total of the distances between the new class centers and the former class centers becomes equal to or smaller than a predetermined value, the steps of calculating the distance from the class center and classifying the sample into a new class are repeated for all of the samples (step A7). After completion of the classification, the result is produced (step A8).

In the clustering method based on normal mixture distribution, parameter estimation is generally carried out by the use of the maximum likelihood method. By the use of an estimated clustering parameter, each sample is clustered according to the Bayes rule. In the clustering method based on normal mixture distribution, posterior probabilities are calculated by a probability density function given by Equation (1) to determine the class into which the sample is to be classified.

$$f(x;\theta) = \sum_{j=1}^{k} \omega_j \varphi(x;\mu_j, \sigma^2{}_j) \qquad (1)$$

Herein, x represents a sample, $\omega_j$, a weight parameter, $\phi(x; \mu_j, \sigma^2{}_j)$, the probability density function of normal distribution having an average $\mu_j$ and a variance $\sigma^2{}_j$, $\theta = (\omega_j, \mu_j, \sigma^2{}_j)$, a clustering parameter collectively representing the weight, the average, and the variance, k represents the number of classes.

In the clustering method based on normal mixture distribution, it is necessary to estimate the clustering parameter $\theta$ contained in Equation (1). The maximum likelihood method is well known as a classical method for parameter estimation and is often used in parameter estimation by the clustering method based on normal mixture distribution. The maximum likelihood method is a method of estimating the clustering parameter $\theta$ which maximizes a logarithmic likelihood function $L(\theta)$ as a function of the clustering parameter $\theta$. The logarithmic likelihood function $L(\theta)$ is given by Equation (2).

$$L(\theta) = \frac{1}{n} \sum_{i=1}^{n} \log f(x_i, \theta) \qquad (2)$$

Herein, n represents the number of samples.

For each sample, posterior probabilities $p_j$ in the respective classes are calculated by the use of the estimated clustering parameter $\theta$ according to Equation (3) and the class to which the sample is to be classified is determined with reference to the posterior probabilities $p_j$.

$$p_j = \frac{\omega_j \varphi(x;\mu_j, \sigma_j^2)}{f(x; \theta)} \qquad (3)$$

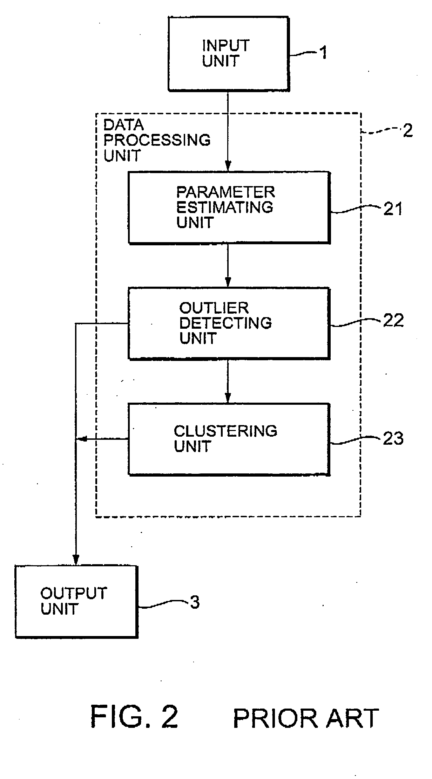

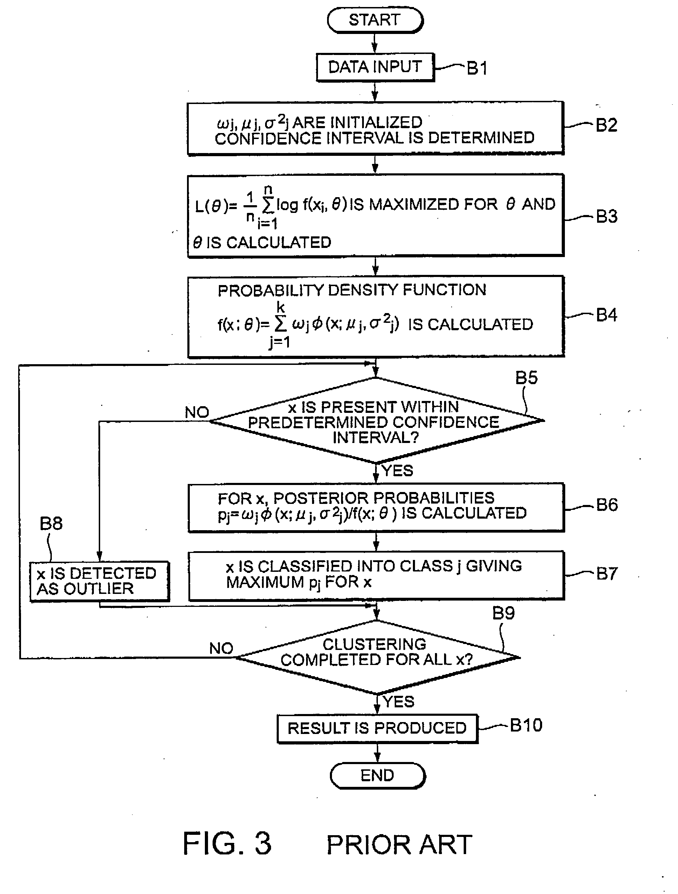

Referring to Figs. 2 and 3, a clustering apparatus for realizing the clustering method based on normal mixture distribution will be described.

As illustrated in Fig. 2, the clustering apparatus comprises an input unit 1 such as a keyboard, a data processing unit 2 operable under control of a program, and an output unit 3 such as a display or a printer.

The data processing unit 2 comprises a parameter estimating section 21, an outlier detecting section 22, and a clustering section 23.

Referring to Fig. 3, description will be made of the clustering method based on normal mixture distribution executed in the clustering apparatus illustrated in Fig. 2.

At first, the input unit 1 is supplied with a dataset including a plurality of samples (step B1). Various parameters are initialized (step B2). By the use of the dataset supplied in the step B2 and the parameters initialized in the step B2, the parameter estimating section 21 estimates the clustering parameter $\theta$ in accordance with Equation (2) (step B3). By the use of the clustering parameter $\theta$ estimated in the step B3, the parameter estimating section 21 calculates the probability density function given by Equation (1) (step B4).

The outlier detecting section 22 judges whether or not each sample is present within a predetermined confidence interval of the probability density function to thereby judge an outlier (step B5). If the sample is not present in the confidence interval, the outlier detecting section 22 detects the sample as the outlier (step B8).

For each sample which has not been detected as the outlier in the outlier detecting section 22, the clustering section 23 calculates the posterior probabilities $p_j$ in Equation (3) (step B6). The clustering section 23 determines a class j which, according to Equation (3), gives the maximum posterior probability $p_j$ for the sample and classifies the sample into the class j (step B7). These steps B5 to B8 in Fig. 3 are repeated for all the samples (step B9). After completion of clustering, the result is produced (step B10).

The existing technique has five disadvantages which will presently be described.

As a first disadvantage, clustering is difficult in case where the number of classes is unknown for the dataset to be subjected to clustering. This is because, in the K-means clustering and the clustering method based on normal mixture distribution using the maximum likelihood method, stable and reliable clustering is difficult unless the number of classes is known.

As a second disadvantage, the K-means clustering can not detect, as an unidentifiable or unclusterable sample, a sample whose class is ambiguous and indefinite. This is because the K-means clustering has no more than a function of unexceptionally classifying every sample to any one of the classes.

As a third disadvantage, improper clustering may be carried out due to the presence of an outlier. This is because both of the K-means clustering and the clustering method based on normal mixture distribution using the maximum likelihood method are not robust against the outlier but is seriously affected by the outlier.

As a fourth disadvantage, classification into a proper class is difficult in the clustering method based on normal mixture distribution using the maximum likelihood method in case where only one sample belongs to a particular class. This is because, in the clustering method based on normal mixture distribution using the maximum likelihood method, an estimated value of the clustering parameter $\theta$ can not be obtained if only one sample belongs to a particular class.

As a fifth disadvantage, the K-means clustering may carry out improper clustering in case where respective classes are different in data spread or variation. This is because the K-means clustering does not have a function of coping with the difference in data spread or variation.

It is a first object of this invention to provide a clustering technique and a clustering system capable of properly carrying out clustering even if the number of classes is unknown.

It is a second object of this invention to provide a clustering technique and a clustering system capable of detecting, as an unidentifiable sample, a sample whose class is ambiguous and indefinite.

It is a third object of this invention to provide a clustering technique and a clustering system capable of carrying out clustering robust against an outlier which may be contained in samples.

It is a fourth object of this invention to provide a clustering technique and a clustering system capable of properly carrying out clustering, even if only one sample belongs to a particular class, without judging the sample as an outlier.

It is a fifth object of this invention to provide a clustering technique and a clustering system capable of properly carrying out clustering even if respective classes are different in data spread or variation.

According to a first aspect of this invention, there is provided a clustering apparatus comprising an input unit supplied with a dataset including a plurality of samples, a data processing unit for processing the samples supplied from the input unit to classify each sample into a class, and an output unit for producing a processing result representative of classification carried out in the data processing unit, the clustering apparatus further comprising a parameter memory for memorizing a target parameter obtained from past experiments, the data processing unit comprising a parameter estimating section for estimating a clustering parameter by the use of the target parameter memorized in the parameter memory. Herein, the parameter estimating section estimates the clustering parameter by the use of a modified likelihood function which is robust against an outlier.

Thus, the parameter memory in this invention memorizes the target parameter obtained from past experiments. By using the target parameter in the parameter estimating section, past parameters are utilized in clustering. With the above-mentioned structure, the number of classes can be determined to be an appropriate value. The parameter estimating section adopts the modified likelihood function as a technique robust against an outlier. Thus, it is possible to achieve the first, the third, and the fourth objects of this invention.

In the clustering apparatus according to the first aspect, it is preferable that the data processing unit further comprises an unidentifiable sample detecting section for detecting a particular sample as an unidentifiable sample if posterior probabilities calculated for the particular sample by a probability density function produced by the clustering parameter estimated by the parameter estimating section are smaller than a predetermined value.

Thus, the unidentifiable sample detecting section in this invention detects the particular sample as the unidentifiable sample if the posterior probabilities to be used in clustering are smaller than the predetermined value. By adopting the above-mentioned structure, a particular sample whose class is ambiguous and indefinite can be detected as an unidentifiable sample. Thus, it is possible to achieve the second object of this invention.

In the clustering apparatus according to the first aspect, it is preferable that the data processing unit further comprises:

an outlier detecting section for detecting, by the use of a probability density function produced by an estimated parameter estimated by the parameter estimating section, a particular sample as an outlier if the particular sample is deviated from a predetermined confidence interval,

an unidentifiable sample detecting section for detecting, from those samples which have not been detected as the outlier in the outlier detecting section, a specific sample as an unidentifiable or unclusterable sample if posterior probabilities calculated by the probability density function for the specific sample are smaller than a predetermined probability value, and

a clustering section for classifying each sample which has not been detected as the outlier or the unidentifiable sample in the outlier detecting section or the unidentifiable sample detecting section into each class by the use of the posterior probabilities.

In the clustering apparatus according to the first aspect, it is preferable that the data processing unit further comprises:

an unidentifiable sample detecting section for detecting a particular sample as an unidentifiable sample if posterior probabilities calculated for the particular sample by a probability density function produced by an estimated parameter estimated by the parameter estimating section are smaller than a predetermined probability value,

an outlier detecting section for detecting, from those samples which have not been detected as the unidentifiable sample in the unidentifiable sample detecting section, a specific sample as an outlier by the use of the probability density function if the specific sample is deviated from a predetermined confidence interval, and

a clustering section for classifying each sample which has not been detected as the unidentifiable sample or the outlier in the unidentifiable sample detecting section or the outlier detecting section into each class by the use of the posterior probabilities.

Preferably, the clustering section uses normal mixture distribution having a variance parameter selected per each class.

Thus, the variance parameter of the normal mixture distribution used in the clustering section of this invention is freely selected per each class. Therefore, the difference in variation among the respective classes can be accommodated. It is thus possible to achieve the fifth object of this invention.

According to a second aspect of this invention, there is provided a clustering method comprising the steps of

supplying an input unit with a dataset including a plurality of samples,

processing, in a data processing unit, the samples supplied from the input unit to classify each sample into a class, and

producing, by an output unit, a processing result representative of classification carried out in the data processing unit,

the clustering method further comprising the steps of

memorizing, in a parameter memory of a memory unit, a target parameter obtained from past experiments, and

estimating, in a parameter estimating section of the data processing unit, a clustering parameter by the use of the target parameter memorized in the parameter memory.

Preferably, the clustering method according to the second aspect further comprises the step of detecting, by an unidentifiable sample detecting section of the data processing unit, a particular sample as an unidentifiable sample if posterior probabilities calculated for the particular sample by a probability density function produced by the clustering parameter estimated by the parameter estimating section are smaller than a predetermined value.

Preferably, the clustering method according to the second aspect further comprises the steps of

**EP 1 455 300 A2**

detecting, by an outlier detecting section of the data processing unit, a particular sample as an outlier by the use of a probability density function produced by an estimated clustering parameter estimated by the parameter estimating section if the particular sample is deviated from a predetermined confidence interval,

detecting, by an unidentifiable sample detecting section of the data processing unit, a specific sample as an unidentifiable sample from those samples which have not been detected as the outlier in the outlier detecting section, if posterior probabilities calculated by the probability density function for the specific sample are smaller than a predetermined probability value, and

classifying, by a clustering section of the data processing unit, each sample which has not been detected as the outlier or the unidentifiable sample in the outlier detecting section or the unidentifiable sample detecting section into each class by the use of the posterior probabilities.

Preferably, the clustering method according to the second aspect further comprises the steps of

detecting, by an unidentifiable sample detecting section of the data processing unit, a particular sample as an unidentifiable sample if posterior probabilities calculated for the particular sample by a probability density function produced by an estimated clustering parameter estimated by the parameter estimating section are smaller than a predetermined probability value,

detecting, by an outlier detecting section of the data processing unit, a specific sample as an outlier by the use of the probability density function from those samples which have not been detected as the unidentifiable sample in the unidentifiable sample detecting section, if the specific sample is deviated from a predetermined confidence interval, and

classifying, by a clustering section of the data processing unit, each sample which has not been detected as the unidentifiable sample or the outlier in the unidentifiable sample detecting section or the outlier detecting section into each class by the use of the posterior probabilities.

According to a third aspect of this invention, there is provided a clustering program for making a computer execute a function of supplying a dataset including a plurality of samples, a function of processing the samples supplied by the supplying function to classify each sample into a class, and a function of producing a processing result representative of classification carried out by the classifying function, the clustering program further including a function of memorizing, in a memory unit, a target parameter obtained from past experiments, the classifying function including a function of estimating a clustering parameter by the use of the target parameter memorized in the memory unit.

In the clustering program according to the third aspect, it is preferable that the classifying function further includes a function of detecting a particular sample as an unidentifiable sample if posterior probabilities calculated for the particular sample by a probability density function produced by the clustering parameter estimated by the estimating function are smaller than a predetermined value.

In the clustering program according to the third aspect, the classifying function further includes the functions of

detecting, by the use of a probability density function produced by an estimated clustering parameter estimated by the parameter estimating function, a particular sample as an outlier if the particular sample is deviated from a predetermined confidence interval,

detecting, from those samples which have not been detected as the outlier in the outlier detecting function, a specific sample as an unidentifiable or unclusterable sample if posterior probabilities calculated by the probability density function for the specific sample are smaller than a predetermined probability value, and

classifying each sample which has not been detected as the outlier or the unidentifiable sample in the outlier detecting function or the unidentifiable sample detecting function into each class by the use of the posterior probabilities.

In the clustering program according to the third aspect, the classifying function further includes the functions of

detecting a particular sample as an unidentifiable sample if posterior probabilities calculated for the particular sample by a probability density function produced by an estimated clustering parameter estimated by the parameter estimating function are smaller than a predetermined probability value,

detecting, from those samples which have not been detected as the unidentifiable sample in the unidentifiable sample detecting function, a specific sample as an outlier by the use of the probability density function if the specific sample is deviated from a predetermined confidence interval, and

classifying each sample which has not been detected as the unidentifiable sample or the outlier in the unidentifiable sample detecting function or the outlier detecting function into each class by the use of the posterior probabilities.

5

Now, this invention will be described in detail with reference to the drawing.

Fig. 1 is a flow chart for describing K-means clustering as an existing technique;
Fig. 2 is a block diagram of a clustering apparatus for realizing, as another existing technique, a clustering method based on normal mixture distribution using a maximum likelihood method;
Fig. 3 is a flow chart for describing the clustering method realized by the apparatus illustrated in Fig. 2;
Fig. 4 is a block diagram of a clustering apparatus for realizing a clustering method according to a first embodiment of this invention;
Fig. 5 is a flow chart for describing the clustering method according to the first embodiment of this invention;
Fig. 6 is a block diagram of a clustering apparatus for realizing a clustering method according to a second embodiment of this invention;
Fig. 7 is a flow chart for describing the clustering method according to the second embodiment of this invention;
Fig. 8 is a block diagram of a clustering apparatus according to a third embodiment of this invention;
Fig. 9 shows Gene3335 as a dataset to be subjected to clustering;
Fig. 10 shows a clustering result for Gene3335 in Fig. 9 according to the K-means clustering;
Fig. 11 shows a clustering result for Gene3335 in Fig. 9 according to this invention;
Fig. 12 shows simulation data as a dataset to be subjected to clustering;
Fig. 13 shows a clustering result for the simulation data in Fig. 12 according to the clustering method based on normal mixture distribution using a maximum likelihood method;
Fig. 14 shows a clustering result for the simulation data in Fig. 12 according to this invention;
Fig. 15 is a flow chart for describing a clustering method based on normal mixture distribution using a maximum likelihood method with an unidentifiable sample detecting section incorporated therein;
Fig. 16 shows Gene10530 as a dataset to be subjected to clustering;
Fig. 17 shows a clustering result for Gene10530 in Fig. 16 according to the clustering method based on normal mixture distribution using a maximum likelihood method; and
Fig 18 shows a clustering result for Gene10530 in Fig. 16 according to this invention.

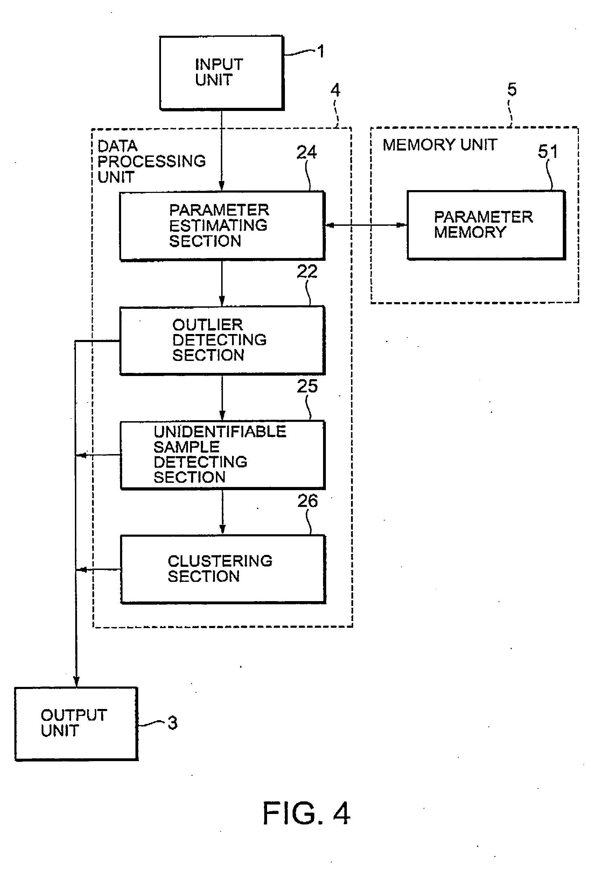

Referring to Fig. 4, a clustering apparatus according to a first embodiment of this invention comprises an input unit 1 such as a keyboard, a data processing unit 4 operable under control of a program, a memory unit 5 for memorizing information, and an output unit 3 such as a display or a printer.

The memory unit 5 comprises a parameter memory 51.

The parameter memory 51 preliminarily memorizes a target parameter $\zeta$ obtained from past experiments and parameters $\beta$ and $\lambda$ for tuning a parameter estimated value as a resultant value.

The data processing unit 4 comprises a parameter estimating section 24, an outlier detecting section 22, an unidentifiable sample detecting section 25, and a clustering section 26.

The parameter estimating section 24 estimates a clustering parameter $\theta$ by the use of a dataset including a plurality of samples supplied from the input unit 1 and the parameters $\zeta$, $\beta$, and $\lambda$ memorized in the parameter memory 51. By the use of a probability density function produced by the clustering parameter $\theta$ estimated by the parameter estimating section 24, the outlier detecting section 22 detects a particular sample as an outlier if the particular sample is deviated from a predetermined confidence interval.

The unidentifiable sample detecting section 25 detects, from those samples which have not been detected as the outlier in the outlier detecting section 22, a specific sample as an unidentifiable sample if posterior probabilities calculated for the specific sample by the probability density function similar to that mentioned above are smaller than a predetermined probability value $\gamma$.

The clustering section 26 classifies each sample, which has not been detected as the outlier or the unidentifiable sample in the outlier detecting section 22 or the unidentifiable sample detecting section 25, into each class by the use of the posterior probabilities similar to that mentioned above.

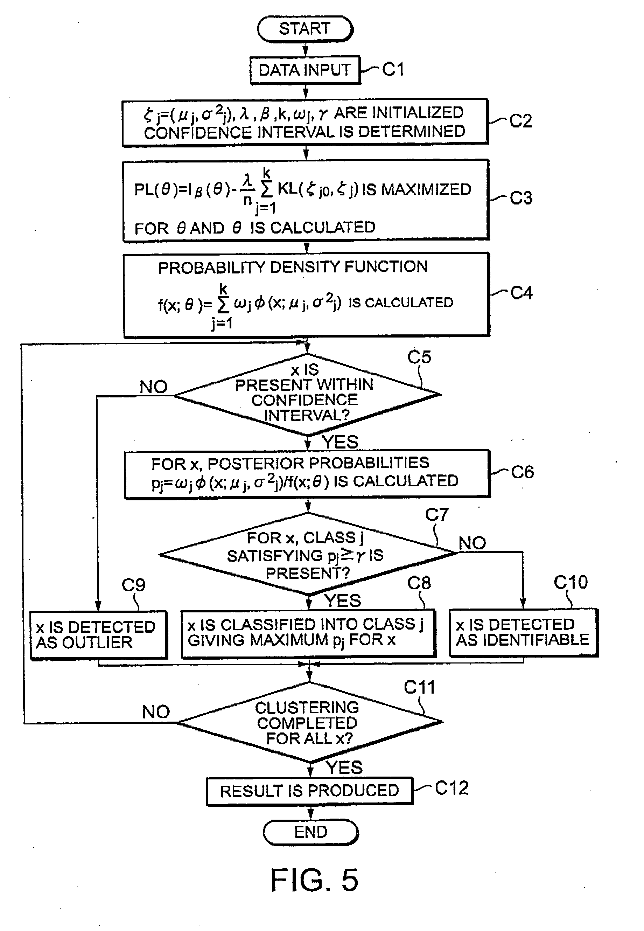

Next referring to Fig. 5 in addition to Fig. 4, description will be made in detail about a clustering method realized by the clustering apparatus illustrated in Fig. 4.

The input unit 1 is supplied with the dataset including a plurality of samples x (step C1 in Fig. 5). By the use of the parameters $\zeta$, $\beta$, and $\lambda$ memorized in the parameter memory 51, various parameters are initialized (step C2). By the use of the dataset supplied in the step C1 and the parameters initialized in the step C2, the parameter estimating section 24 obtains the clustering parameter $\theta$ by maximizing a modified likelihood function PL($\theta$) given by Equation (4) with respect to the clustering parameter $\theta$ (step C3).

$$PL(\theta) = \ell_\beta(\theta) - \frac{\lambda}{n}\sum_{j=1}^{k} KL(\zeta_{j0}, \zeta_j) \qquad (4)$$

Herein, n represents the number of samples, $\lambda$, a tuning parameter, k, the number of classes. $\theta = (\omega_j, \mu_j, \sigma^2_j)$, $\zeta_j = (\mu_j, \sigma^2_j)$, $\omega_j$ represents a weight parameter of the probability density function given by Equation (1), $\mu_j$, an average, $\sigma^2_j$, a variance value. The modified likelihood function PL($\theta$) is a function robust against the outlier. $\ell_\beta(\theta)$ and KL($\zeta_{j0}$, $\zeta_j$) are given by Equations (5) and (6), respectively.

$$\ell_\beta(\theta) = \frac{1}{n\beta}\sum_{i=1}^{n} f(x_i;\theta)^\beta - b_\beta(\theta) \qquad (5)$$

Herein, $\beta > 0$ and $b_\beta(\theta) = \frac{1}{1+\beta}\int f(x;\theta)^{1+\beta}dx$.

$$KL(\zeta_{j0}, \zeta_j) = \int \varphi(z;\zeta_{j0})\log\frac{\varphi(z;\zeta_{j0})}{\varphi(z;\zeta_j)}dz. \qquad (6)$$

Herein, $\phi(z; \zeta_j)$ represents a probability density function of normal distribution having an average $\mu_j$ and a variance $\sigma^2_j$. The parameter estimating section 24 calculates the probability density function given by Equation (1) by the use of the clustering parameter $\theta$ obtained as mentioned above (step C4). The outlier detecting section 22 judges whether or not each sample supplied in the step C1 is present within a predetermined confidence interval of the probability density function (step C5). If the sample is not present within the confidence interval, the sample is detected as an outlier (step C9).

In Fig. 5, it is assumed that the sample is judged to be present within the confidence interval in the step C5. In this event, the sample is supplied to the unidentifiable sample detecting section 25. For the sample, the unidentifiable sample detecting section 25 calculates the posterior probabilities for the respective classes according to Equation (3) (step C6). The unidentifiable sample detecting section 25 judges whether or not the posterior probabilities exceed the value of $\gamma$ (step C7). If the posterior probabilities are smaller than $\gamma$, the sample is detected as an unidentifiable sample (step C10).

In Fig. 5, it is assumed that any of the posterior probabilities for the sample is not smaller than $\gamma$ in the step C7. In this event, the sample is supplied to the clustering section 26. With reference to the posterior probabilities calculated for the sample, the clustering section 26 selects, as a class of the sample, a class j giving the maximum value of $p_j$ (step C8). The data processing unit 4 repeatedly carries out the above-mentioned steps for all the samples (step C11). After completion of clustering for all the samples, the result is supplied to the output unit 3 (step C12).

Next, the effect of this embodiment will be described.

In this embodiment, the modified likelihood function given by Equation (4) is established and maximized so that the clustering complying with the objects of this invention can be carried out. By adjusting the confidence interval and the threshold value $\gamma$ for the posterior probabilities, it is possible to adjust the clustering. The variance parameter $\sigma^2_j$ of normal mixture distribution used in the clustering section 26 is freely selected per each class.

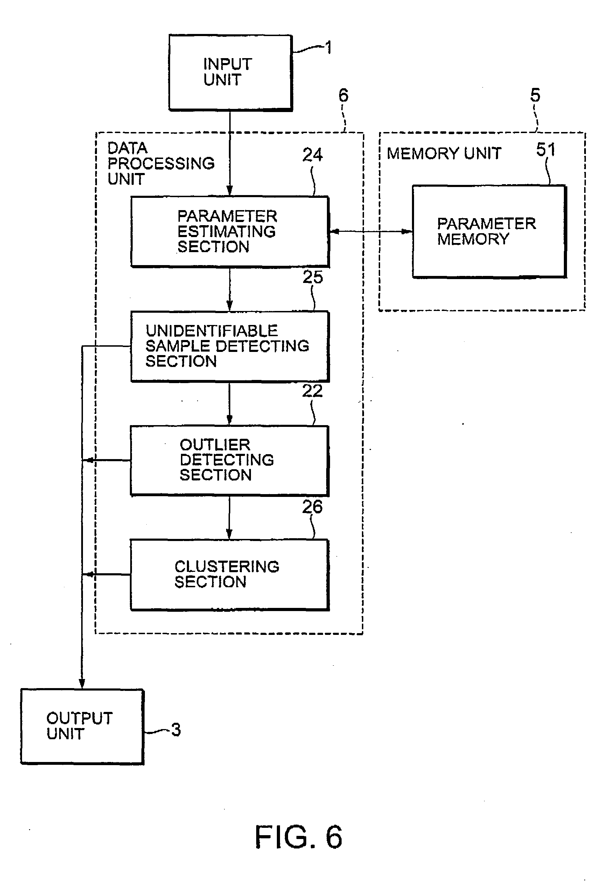

Referring to Fig. 6, a clustering apparatus according to a second embodiment of this invention will be described. The clustering apparatus in this embodiment is different from the clustering apparatus illustrated in Fig. 4 in that the outlier detecting section 22 and the unidentifiable detecting section 25 are different or reversed in the order of arrangement.

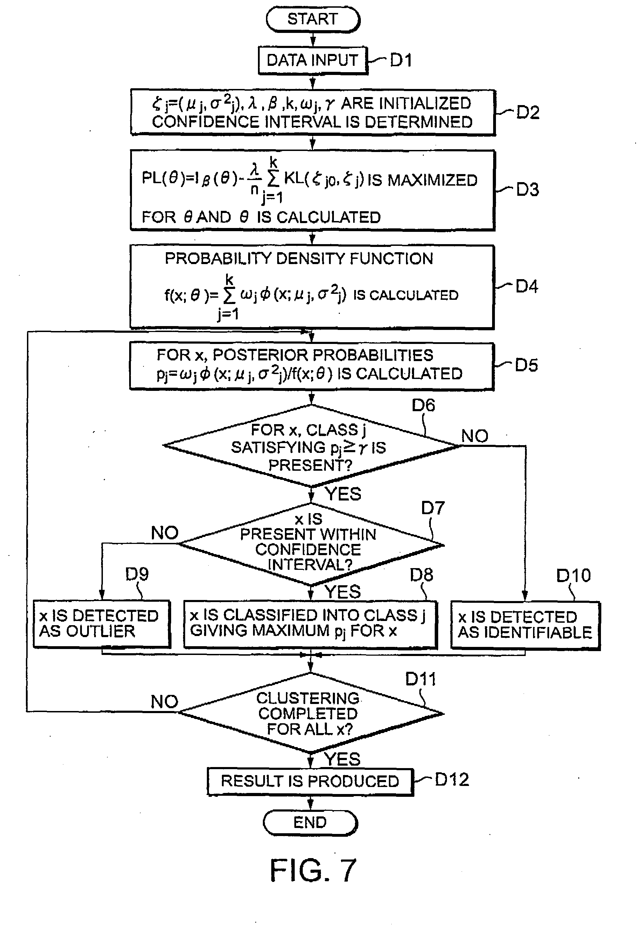

Referring to Fig. 7 in addition to Fig. 6, description will be made in detail about a clustering method executed by the clustering apparatus illustrated in Fig. 6.

The parameter estimating section 24, the clustering section 26, and the parameter memory 51 involved in steps D1 to D4 and D8 to D12 in Fig. 7 in this embodiment are same in function as those in the first embodiment. Therefore, description thereof will be omitted.

In the first embodiment, the outlier is first detected in the steps C5 to C7 in Fig. 5 and the unidentifiable sample is detected from remaining samples. In the second embodiment, the unidentifiable sample is first detected in steps D5 to D7 in Fig. 7 and the outlier is detected from remaining samples. Thus, even if detection of the outlier and detection of the unidentifiable sample are different in the order of operation, the similar effect is obtained.

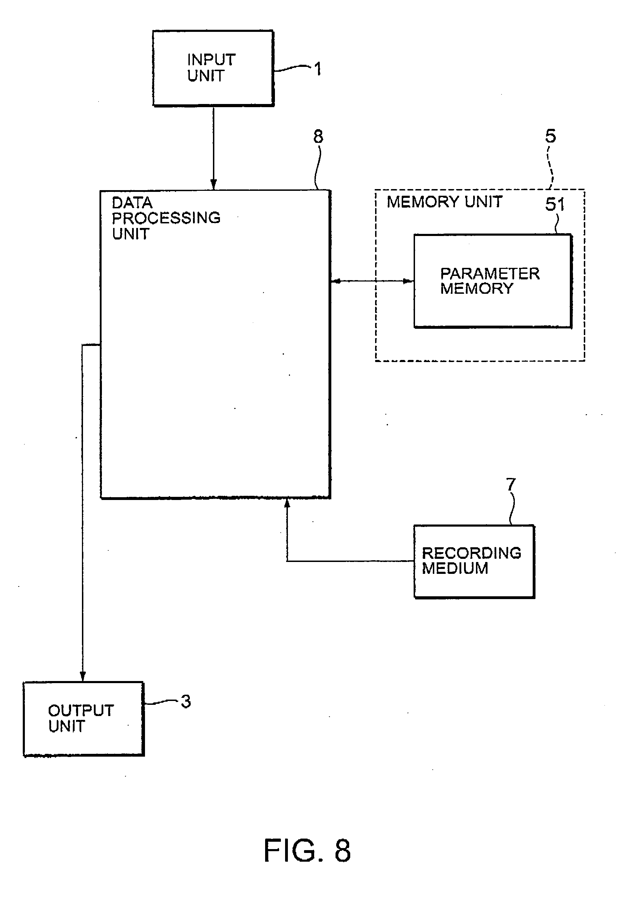

Referring to Fig. 8, a clustering apparatus according to a third embodiment of this invention will be described. The clustering apparatus in this embodiment comprises the input unit 1, a data processing unit 8, the memory unit 5, and the output unit 3, like the first and the second embodiments, and further comprises a recording medium 7 memorizing a clustering program. The recording medium 7 may be a magnetic disk, a semiconductor memory, a CD-ROM, a DVD-ROM, and any other appropriate recording medium.

The clustering program is loaded from the recording medium 7 into the data processing unit 8 to control the operation of the data processing unit 8 and to create a parameter memory 51 in the memory unit 5. Under control of the clustering program, the data processing unit 8 executes an operation similar to those executed by the data processing units 4 and 6 in the first and the second embodiments.

Examples

Next, description will be made of a first example with reference to the drawing. The first example corresponds to the first embodiment.

In this example, consideration will be made of the case where a large number of individuals data plotted on a two-dimensional plane are used as the dataset and a genotype in each sample is judged with reference to their positional relationship. In recent years, typing of a large amount of human single nucleotide polymorphisms (SNPs) is carried out. The genotype is analyzed, for example, by the invader assay. The invader assay is a genome analysis technique developed by Third Wave Technologies, INC in USA. In the invader assay, allele-specific oligo with fluorescent labeling and a template are hybridized with a DNA to be analyzed. The result of hybridization is obtained as the strength of fluorescence so as to analyze the genotype.

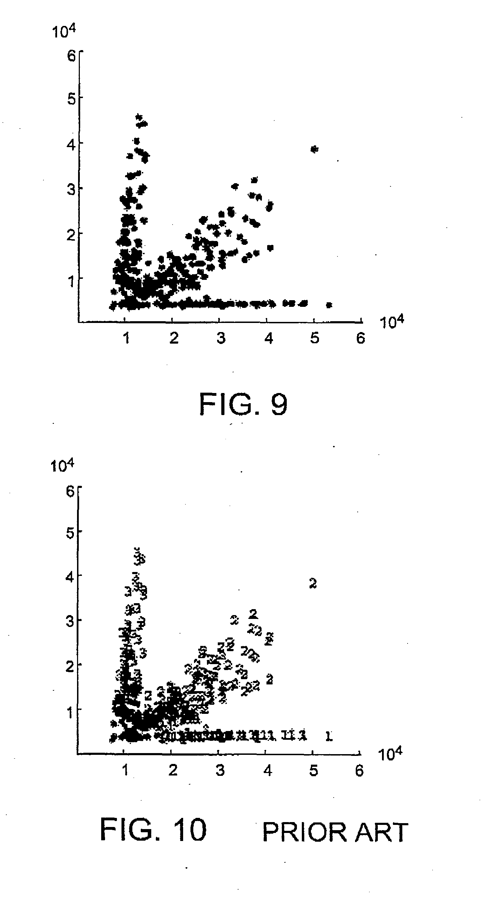

The result of a particular genotype analyzed by the invader assay is plotted on a two-dimensional plane as shown in Fig. 9. The X axis and the Y axis represent the strengths of fluorescence of agents for detecting two alleles (allelic genes), respectively. If the value of X is greater and if the value of Y is greater, it is judged that the individual has an allele 1 and an allele 2, respectively. A sample close to the X axis, a sample close to the Y axis, and a sample close to an inclination of about 45 degrees are judged to have a genotype 1/1, a genotype 2/2, and a genotype 1/2, respectively. A sample near an origin is intended to check the experiment and is not directed to a human sequence.

In this example, this invention is applied in order to cluster the above-mentioned data according to the three genotypes 1/1, 2/2, and 1/2.

At first, comparison will be made between this invention and the K-means clustering described in the background. A dataset to be analyzed is shown in Fig. 9. The dataset Gene3335 in Fig. 9 already cleared the examination by the ethics panel with respect to "Guideline for Ethics Related to Research for Human Genome/Gene Analysis" in the Japanese Foundation for Cancer Research to which Mr. Miki, one of the inventors, belongs. The dataset shown in Fig. 9 includes an unidentifiable sample and an outlier between classes. Those samples near the origin need not be judged. It is well known that appropriate one-dimensional angular data are effective in clustering. Therefore, the clustering which will hereinafter be described was carried out based on the one-dimensional angular data without including those samples near the origin.

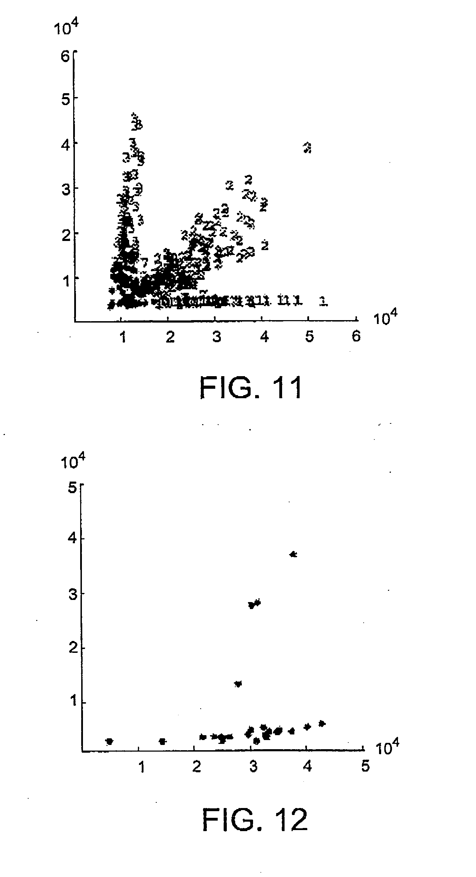

Fig. 10 shows the result when the K-means clustering was applied to the one-dimensional angular data in Fig. 9. Fig. 11 shows the result when the clustering of this invention is applied to the one-dimensional angular data in Fig. 9. In Figs. 10 and 11, the numerals 1 to 3 represent class numbers, 7, an outlier, 0, an unidentifiable sample.

In Fig. 10, each of all samples except those near the origin is classified into any one of the classes. However, a number of obvious clustering errors are observed. On the other hand, in Fig. 11, the result of clustering is reasonable. In addition, each sample which can not clearly be classified into either the class 1 or the class 2 is detected as an unidentifiable sample. Thus, a significant result is obtained.

Next, comparison will be made between this invention and the clustering method based on normal mixture distribution using the maximum likelihood method described in the background. A dataset to be analyzed is simulation data shown in Fig. 12. The dataset in Fig. 12 includes a plurality of samples to be classified into two classes and have one outlier. For the dataset also, clustering was carried out based on one-dimensional angular data without including those samples near the origin.

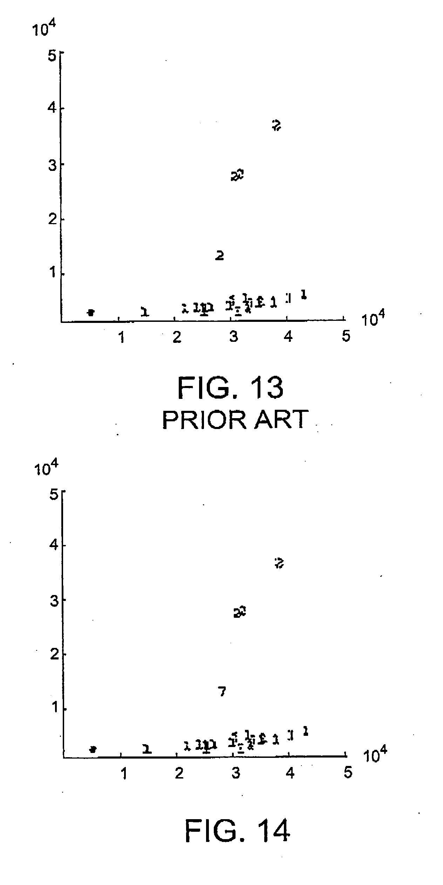

Fig. 13 shows the result when the dataset in Fig. 12 was subjected to clustering according to the normal mixture distribution using the maximum likelihood method. Fig. 14 shows the result when the dataset in Fig. 12 was subjected to clustering according to this invention.

In Fig. 13, the samples are classified into two classes since the number of classes in the maximum likelihood method is preliminarily selected to be equal to two. However, the sample as the outlier is also classified into the class 2. On the other hand, in Fig. 14, even if the number of classes is selected to be equal to three, the samples are correctly classified into two classes and the outlier is detected.

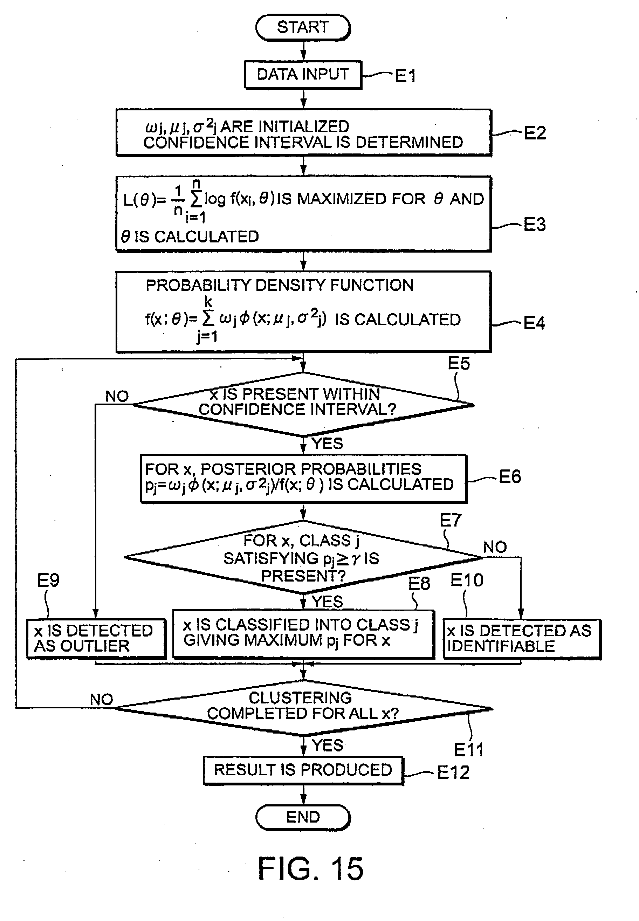

By the use of another dataset, comparison between this invention and the maximum likelihood method will be made. The clustering method based on normal mixture distribution using the maximum likelihood method herein used for comparison incorporates the unidentifiable sample detecting section which is a part of this invention. The clustering is carried out through steps shown in Fig. 15.

The steps in Fig. 15 are different from those in Fig. 3 in that steps E7 and E10 are added. Specifically, the steps E1 to E6 in Fig. 15 correspond to the steps B1 to B6 in Fig. 3, respectively. The steps E8 and E9 in Fig. 15 correspond to the steps B7 and B8 in Fig. 3, respectively. The steps E11 and E12 in Fig. 15 correspond to the steps B9 and B10 in Fig. 3, respectively.

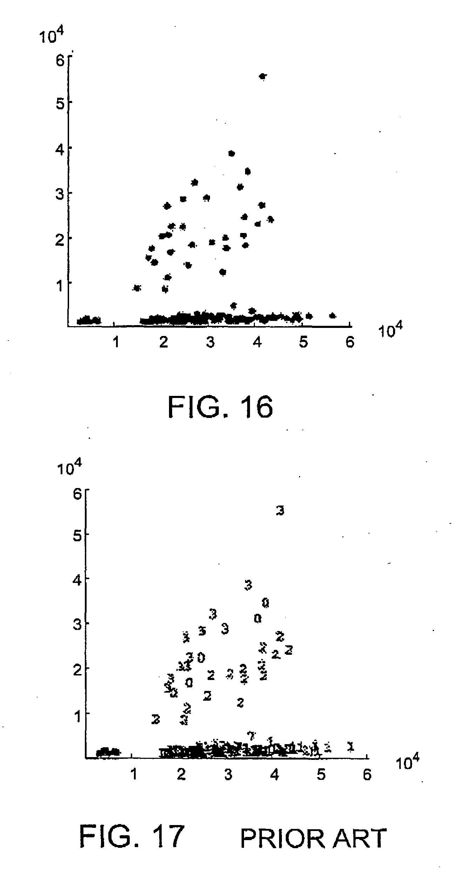

The dataset to be analyzed is shown in Fig. 16. The dataset Gene10530 in Fig. 16 already cleared the examination by the ethics panel with respect to "Guideline for Ethics Related to Research for Human Genome/Gene Analysis" in the Japanese Foundation for Cancer Research to which Mr. Miki, one of the inventors, belongs. The dataset shown in Fig. 16 include a plurality of samples to be classified into two classes except those samples near the origin. An outlier is present also.

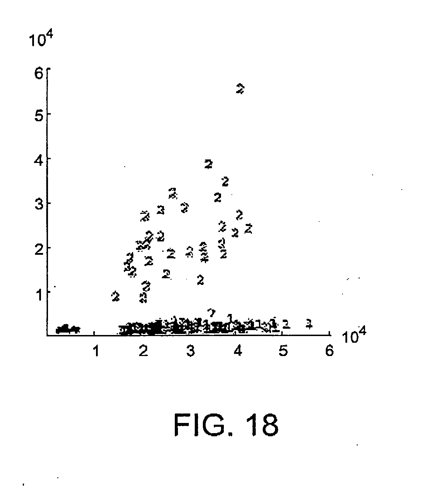

Fig. 17 shows the result when the dataset Gene10530 in Fig. 16 was subjected clustering according to the normal mixture distribution using the maximum likelihood method. Fig. 18 shows the result when the dataset Gene10530 in Fig. 16 was subjected to clustering according to this invention.

In Fig. 17, the samples which should be classified into two classes are classified into three classes since the number of classes in the maximum likelihood method is selected to be equal to 3. Those samples to belong to the class 2 are unreasonably classified into two different classes and intermediate samples are judged unidentifiable. On the other hand, in Fig. 18, even if the number of classes is selected to be equal to three, the samples are properly classified into two classes. In addition, an outlier is detected.

From the above-mentioned results, it has been found out that this invention solves the problems in the existing techniques.

It is noted here that this invention is not restricted to the foregoing embodiment but may be modified in various other manners within the scope of this invention.

As described above, this invention has the following effects.

As a first effect, clustering is stably and properly carried out even if the number of classes of data is unknown. This is because the parameter obtained from past experiments is preliminarily memorized and used for estimation of a new parameter.

As a second effect, those samples whose class is ambiguous and indefinite can be detected as an unidentifiable sample. This is because the function of detecting the unidentifiable sample is created and applied to this invention.

As a third effect, clustering is properly carried out even if an outlier is present. This is because an algorithm robust against the outlier is created so that no serious influence is given by the outlier.

As a fourth effect, even if only one sample belongs to a particular class, the sample can be classified into a proper class. This is because, in this invention, a proper estimated value is obtained, even if only one sample belongs to a particular class, so that the sample is not judged as an outlier.

As a fifth effect, proper clustering is carried out even if variation in respective classes is different. This is because a model structure is adopted in which difference in variation can be considered by estimating the variance parameter of normal mixture distribution per each class.

## Claims

1. A clustering apparatus comprising an input unit supplied with a dataset including a plurality of samples, a data processing unit for processing the samples supplied from the input unit to classify each sample into a class, and an output unit for producing a processing result representative of classification carried out in the data processing unit, the clustering apparatus further comprising a parameter memory for memorizing a target parameter obtained from past experiments, the data processing unit comprising a parameter estimating section for estimating a clustering parameter by the use of the target parameter memorized in the parameter memory.

2. A clustering apparatus as claimed in Claim 1, wherein the parameter estimating section estimates the clustering parameter by the use of a modified likelihood function which is robust against an outlier.

3. A clustering apparatus as claimed in Claim 1 or 2, wherein the data processing unit further comprises an unidentifiable sample detecting section for detecting a particular sample as an unidentifiable sample if posterior probabilities calculated for the particular sample by a probability density function produced by the clustering parameter estimated by the parameter estimating section are smaller than a predetermined value.

4. A clustering apparatus as claimed in Claim 1, 2 or 3, wherein the data processing unit further comprises:

an outlier detecting section for detecting, by the use of a probability density function produced by an estimated parameter estimated by the parameter estimating section, a particular sample as an outlier if the particular sample is deviated from a predetermined confidence interval,

an unidentifiable sample detecting section for detecting, from those samples which have not been detected as the outlier in the outlier detecting section, a specific sample as an unidentifiable or unclusterable sample if posterior probabilities calculated by the probability density function for the specific sample are smaller than a predetermined probability value, and

a clustering section for classifying each sample which has not been detected as the outlier or the unidentifiable sample in the outlier detecting section or the unidentifiable sample detecting section into each class by the use of the posterior probabilities.

**5.** An apparatus as claimed in any one of Claims 1 to 4, wherein the data processing unit further comprises:

an unidentifiable sample detecting section for detecting a particular sample as an unidentifiable sample if posterior probabilities calculated for the particular sample by a probability density function produced by an estimated parameter estimated by the parameter estimating section are smaller than a predetermined probability value,

an outlier detecting section for detecting, from those samples which have not been detected as the unidentifiable sample in the unidentifiable sample detecting section, a specific sample as an outlier by the use of the probability density function if the specific sample is deviated from a predetermined confidence interval, and

a clustering section for classifying each sample which has not been detected as the unidentifiable sample or the outlier in the unidentifiable sample detecting section or the outlier detecting section into each class by the use of the posterior probabilities.

**6.** A clustering apparatus as claimed in Claim 4 or 5, wherein the clustering section uses normal mixture distribution having a variance parameter selected per each class.

**7.** A clustering method comprising the steps of

supplying an input unit with a dataset including a plurality of samples,

processing, in a data processing unit, the samples supplied from the input unit to classify each sample into a class, and

producing, by an output unit, a processing result representative of classification carried out in the data processing unit,

the clustering method further comprising the steps of

memorizing, in a parameter memory of a memory unit, a target parameter obtained from past experiments, and

estimating, in a parameter estimating section of the data processing unit, a clustering parameter by the use of the target parameter memorized in the parameter memory.

**8.** A clustering method as claimed in Claim 7, further comprising the step of detecting, by an unidentifiable sample detecting section of the data processing unit, a particular sample as an unidentifiable sample if posterior probabilities calculated for the particular sample by a probability density function produced by the clustering parameter estimated by the parameter estimating section are smaller than a predetermined value.

**9.** A clustering method as claimed in Claim 7 or 8, further comprising the steps of

detecting, by an outlier detecting section of the data processing unit, a particular sample as an outlier by the use of a probability density function produced by an estimated clustering parameter estimated by the parameter estimating section if the particular sample is deviated from a predetermined confidence interval,

detecting, by an unidentifiable sample detecting section of the data processing unit, a specific sample as an unidentifiable sample from those samples which have not been detected as the outlier in the outlier detecting section, if posterior probabilities calculated by the probability density function for the specific sample are smaller than a predetermined probability value, and

classifying, by a clustering section of the data processing unit, each sample which has not been detected as the outlier or the unidentifiable sample in the outlier detecting section or the unidentifiable sample detecting section into each class by the use of the posterior probabilities.

**10.** A clustering method as claimed in Claim 7, 8 or 9, further comprising the steps of

detecting, by an unidentifiable sample detecting section of the data processing unit, a particular sample as an unidentifiable sample if posterior probabilities calculated for the particular sample by a probability density function produced by an estimated clustering parameter estimated by the parameter estimating section are smaller than a predetermined probability value,

detecting, by an outlier detecting section of the data processing unit, a specific sample as an outlier by the use of the probability density function from those samples which have not been detected as the unidentifiable sample in the unidentifiable sample detecting section, if the specific sample is deviated from a predetermined confidence interval, and

classifying, by a clustering section of the data processing unit, each sample which has not been detected as the unidentifiable sample or the outlier in the unidentifiable sample detecting section or the outlier detecting section into each class by the use of the posterior probabilities.

11. A clustering program for making a computer execute a function of supplying a dataset including a plurality of samples, a function of processing the samples supplied by the supplying function to classify each sample into a class, and a function of producing a processing result representative of classification carried out by the classifying function, the clustering program further comprising a function of memorizing, in a memory unit, a target parameter obtained from past experiments, the classifying function including a function of estimating a clustering parameter by the use of the target parameter memorized in the memory unit.

12. A clustering program as claimed in Claim 11, wherein the classifying function further comprises a function of detecting a particular sample as an unidentifiable sample if posterior probabilities calculated for the particular sample by a probability density function produced by the clustering parameter estimated by the estimating function are smaller than a predetermined value.

13. A clustering program as claimed in Claim 11 or 12, wherein the classifying function further comprises the functions of

detecting, by the use of a probability density function produced by an estimated clustering parameter estimated by the parameter estimating function, a particular sample as an outlier if the particular sample is deviated from a predetermined confidence interval,

detecting, from those samples which have not been detected as the outlier in the outlier detecting function, a specific sample as an unidentifiable or unclusterable sample if posterior probabilities calculated by the probability density function for the specific sample are smaller than a predetermined probability value, and

classifying each sample which has not been detected as the outlier or the unidentifiable sample in the outlier detecting function or the unidentifiable sample detecting function into each class by the use of the posterior probabilities.

14. A clustering program as claimed in Claim 11, 12 or 13, wherein the classifying function further includes the functions of

detecting a particular sample as an unidentifiable sample if posterior probabilities calculated for the particular sample by a probability density function produced by an estimated clustering parameter estimated by the parameter estimating function are smaller than a predetermined probability value,

detecting, from those samples which have not been detected as the unidentifiable sample in the unidentifiable sample detecting function, a specific sample as an outlier by the use of the probability density function if the specific sample is deviated from a predetermined confidence interval, and

classifying each sample which has not been detected as the unidentifiable sample or the outlier in the unidentifiable sample detecting function or the outlier detecting function into each class by the use of the posterior probabilities.

```
              ╭──────────╮
              │  START   │
              ╰────┬─────╯
                   ↓
          ┌─────────────────┐
          │   DATA INPUT    │────  A1
          └────────┬────────┘
                   ↓
          ┌─────────────────┐
          │ k IS INITIALIZED│────  A2
          └────────┬────────┘
                   ↓
     ┌────────────────────────────────────┐
     │ k SAMPLES ARE EXTRACTED AT RANDOM  │────  A3
     │ TO BE USED AS INITIAL CLASS CENTERS│
     └─────────────────┬──────────────────┘
                       ↓
     ┌────────────────────────────────────┐
     │ CLOSEST CLASS CENTER IS DETERMINED │────  A4
     │ FOR x AND SELECTED AS CLASS OF x   │
     └─────────────────┬──────────────────┘
                       ↓                      A5
                   ╱───────╲
          NO      ╱ CLUSTERING╲
      ←──────────╱  COMPLETED FOR ╲
                 ╲    ALL x?      ╱
                  ╲──────┬───────╱
                         │ YES
                         ↓
     ┌────────────────────────────────────┐
     │ AVERAGE OF SAMPLES IN EACH         │
     │ CLASS IS CALCULATED TO BE USED     │────  A6
     │ AS NEW CLASS CENTER (CURRENT       │
     │ CLASS CENTER IS REPLACED)          │
     └─────────────────┬──────────────────┘
                       ↓
                  ╱─────────────╲           A7
                 ╱   DISTANCE     ╲
                ╱ BETWEEN NEW CLASS ╲
     NO        ╱ CENTER AND FORMER   ╲
   ←──────────╱ CLASS CENTER IS EQUAL ╲
              ╲ TO OR SMALLER THAN    ╱
               ╲   PREDETERMINED     ╱
                ╲    VALUE?         ╱
                 ╲────────┬────────╱
                          │ YES
                          ↓
          ┌─────────────────────┐
          │ RESULT IS PRODUCED  │────  A8
          └──────────┬──────────┘
                     ↓
              ╭──────────╮
              │   END    │
              ╰──────────╯
```

# FIG. 1    PRIOR ART

FIG. 2    PRIOR ART

FIG. 3    PRIOR ART

FIG. 4

START

DATA INPUT ⌐C1

$\zeta_j = (\mu_j, \sigma^2_j), \lambda, \beta, k, \omega_j, \gamma$ ARE INITIALIZED
CONFIDENCE INTERVAL IS DETERMINED ⌐C2

$PL(\theta) = I_\beta(\theta) - \frac{\lambda}{n} \sum_{j=1}^{k} KL(\zeta_{j0}, \zeta_j)$ IS MAXIMIZED

FOR $\theta$ AND $\theta$ IS CALCULATED ⌐C3

PROBABILITY DENSITY FUNCTION

$f(x; \theta) = \sum_{j=1}^{k} \omega_j \phi(x; \mu_j, \sigma^2_j)$ IS CALCULATED ⌐C4

x IS
PRESENT WITHIN
CONFIDENCE
INTERVAL? C5

NO

YES

FOR x, POSTERIOR PROBABILITIES
$p_j = \omega_j \phi(x; \mu_j, \sigma^2_j)/f(x; \theta)$ IS CALCULATED ⌐C6

FOR x, CLASS j
SATISFYING $p_j \geq \gamma$ IS
PRESENT? C7

NO

YES

C9

x IS DETECTED
AS OUTLIER

C8

x IS CLASSIFIED INTO CLASS j
GIVING MAXIMUM $p_j$ FOR x

C10

x IS DETECTED
AS IDENTIFIABLE

CLUSTERING
COMPLETED
FOR ALL x? C11

NO

YES

RESULT IS PRODUCED ⌐C12

END

FIG. 5

FIG. 6

START

DATA INPUT — D1

$\zeta_j=(\mu_j, \sigma^2_j), \lambda, \beta, k, \omega_j, \gamma$ ARE INITIALIZED
CONFIDENCE INTERVAL IS DETERMINED — D2

$$PL(\theta)=I_\beta(\theta)-\frac{\lambda}{n}\sum_{j=1}^{k} KL(\zeta_{j0}, \zeta_j) \text{ IS MAXIMIZED}$$

FOR $\theta$ AND $\theta$ IS CALCULATED — D3

PROBABILITY DENSITY FUNCTION

$$f(x; \theta)=\sum_{j=1}^{k} \omega_j \phi(x; \mu_j, \sigma^2_j) \text{ IS CALCULATED}$$ — D4

FOR x, POSTERIOR PROBABILITIES
$p_j=\omega_j \phi(x; \mu_j, \sigma^2_j)/f(x;\theta)$ IS CALCULATED — D5

D6
FOR x, CLASS j SATISFYING $p_j \geq \gamma$ IS PRESENT? — NO

YES

D7
x IS PRESENT WITHIN CONFIDENCE INTERVAL? — NO

YES

D9
x IS DETECTED AS OUTLIER

D8
x IS CLASSIFIED INTO CLASS j GIVING MAXIMUM $p_j$ FOR x

D10
x IS DETECTED AS IDENTIFIABLE

D11
CLUSTERING COMPLETED FOR ALL x? — NO

YES

RESULT IS PRODUCED — D12

END

FIG. 7

INPUT
UNIT                          1

8                                    5

DATA
PROCESSING
UNIT                                 MEMORY UNIT        51

                                     PARAMETER
                                     MEMORY

                                                         7

                                     RECORDING
                                     MEDIUM

OUTPUT
UNIT                          3

FIG. 8

FIG. 9

FIG. 10    PRIOR ART

FIG. 11

FIG. 12

FIG. 13
PRIOR ART

FIG. 14

START

DATA INPUT — E1

$\omega$j, $\mu$j, $\sigma^2$j ARE INITIALIZED
CONFIDENCE INTERVAL IS DETERMINED — E2

$L(\theta) = \dfrac{1}{n}\sum\limits_{i=1}^{n} \log f(x_i, \theta)$ IS MAXIMIZED FOR $\theta$ AND

$\theta$ IS CALCULATED — E3

PROBABILITY DENSITY FUNCTION

$f(x;\theta) = \sum\limits_{j=1}^{k} \omega_j \phi(x;\mu_j, \sigma^2_j)$ IS CALCULATED — E4

x IS PRESENT WITHIN
CONFIDENCE INTERVAL? — E5

NO

YES

FOR x, POSTERIOR PROBABILITIES
$p_j = \omega_j \phi(x;\mu_j, \sigma^2_j)/f(x;\theta)$ IS CALCULATED — E6

FOR x, CLASS j
SATISFYING $p_j \geq \gamma$ IS
PRESENT? — E7

NO

E9

E8    E10

YES

x IS DETECTED
AS OUTLIER

x IS CLASSIFIED INTO CLASS j
GIVING MAXIMUM $p_j$ FOR x

x IS DETECTED AS
IDENTIFIABLE

CLUSTERING
COMPLETED FOR ALL x?

NO

YES

E11

RESULT IS PRODUCED — E12

END

FIG. 15

FIG. 16

FIG. 17    PRIOR ART

FIG. 18